# EUROPEAN PATENT APPLICATION

(11) **EP 4 470 986 A1**
(43) Date of publication of application: **04.12.2024**
(21) Application number: 23176635.3
(22) Date of filing: 01.06.2023
(51) Int. Cl.: C04B 28/02

(54) **METHODS FOR THE MANUFACTURE OF CEMENTITIOUS MATERIALS HAVING FINE AGGREGATES REPLACED BY TAILINGS AND CEMENTITIOUS MATERIALS OBTAINED THEREBY**

(71) Applicant: Sika Technology AG, 6340 Baar (CH)
(72) Inventor: HESSELBARTH, Daniela, 8048 Zürich (CH); AVGEROU, Nefeli, 8105 Regensdorf (CH); BELLVER BACA, Maria Teresa, 8047 Zürich (CH); GALLUCCI, Emmanuel, 8048 Zürich (CH); WEINKAUF, Annette, 8048 Zürich (CH)
(74) Representative: Sika Patent Attorneys

(57) **Abstract**

The present invention relates to methods for the manufacture of cementitious materials, where aggregates are replaced by tailings, and to cementitious materials obtained thereby. In particular, the fine fraction of aggregates can be replaced by tailings without the need for adjustment of the gradation. The present invention further relates to the use of tailings with a maximum particle size of not more than 200 µm and at least one of CaO and Ca(OH)₂ to replace the fine fraction of aggregates in a cementitious material.

## Description

### Technical Field

The present invention relates to methods for the manufacture of cementitious materials, where aggregates are replaced by tailings, and to cementitious materials obtained thereby.

### Background of the invention

The gradation of aggregates, especially of sand, has a major impact on properties of cementitious materials such as concrete and mortar. Fresh properties such as water demand and flowability as well as hardened properties such as compressive strength are influenced by the choice of aggregate gradation. Typically, in recipes, also called mix designs, of cementitious materials aggregates of various gradations are present. This is to optimize the packing density of the cementitious material and thereby optimize its properties.

Various concepts exist to optimize the grading of aggregates in cementitious materials such as Fuller's grading curve or the Andreasen model. However, any of these concepts requires knowledge and availability of aggregates, typically sand, of defined gradation.

Natural sand is becoming a rare resource as good deposits are increasingly depleted and protection of the environment limits further exploitation. It is therefore necessary to find alternatives to sand as aggregates for cementitious materials that do not have such problems. Tailings are mineral material excavated from an underground operation. Mine tailings are the residual minerals left after excavation and possible extraction of any valuable materials from the ore. Tailings are normally considered waste. Tailings, in particular mine tailings have been used in cementitious materials with varying success. An overview is provided in the article "Concrete made with Iron Ore Tailings as a Fine Aggregate: A step towards Sustainable Concrete" by M. Arbili et al, published in Materials, 2022, 15, 6236.

It is generally desirable to use tailings, especially mine tailings, as a replacement of natural aggregates, especially sand, in cementitious materials.

### Summary of the invention

It is an object of the present invention to provide ways to effectively use tailings as replacement of aggregates in cementitious materials. In particular, it is an object of the present invention to provide methods for the replacement of aggregates, specifically the fine fraction of aggregates, by tailings, especially mine tailings, in cementitious materials.

It has surprisingly been found that tailings, especially mine tailings, can be used as replacement of the fine fraction of aggregates without the need for re-adjusting the gradation of the fine fraction. It has surprisingly been found that tailings, especially mine tailings, having a monomodal particle size distribution can be used as replacement of the fine fraction of aggregates which fine fraction has a multimodal particle size distribution. It is particularly advantageous that no optimization of the grading of tailings must be done and still the performance of cementitious materials manufactured with fine aggregate replaced by tailings remains essentially unchanged. For the tailings, especially mine tailings, to be an effective replacement of the fine fraction of aggregates it is additionally necessary that CaO, Ca(OH)₂, and/or very fine CaCO₃ is present in the cementitious material.

The objective of the present invention is therefore solved by a method as claimed in claim 1.

Further aspects of the invention are the subject of independent claims. Preferred embodiments are the subject of the dependent claims.

### Ways of carrying out the invention

In a first aspect the present invention relates to a method for the manufacture of a cementitious material, said method comprising the steps of
(i) providing a recipe for a cementitious material comprising aggregates of different grading,
(ii) dividing the aggregates in said recipe into a coarse fraction and a fine fraction,
(iii) adjusting the recipe for the cementitious material to obtain an adjusted recipe for the cementitious material by the steps of
   (a) retaining the coarse fraction of aggregates,
   (b) replacing 1:1 by weight of the fine fraction of aggregates by tailings,
   (c) adjusting the amount of CaO, Ca(OH)₂, and/or very fine CaCO₃ in the recipe for the cementitious material to between 1 - 5 w%, relative to the total dry weight of the cementitious material.

A cementitious material especially is a mortar or concrete, in particular a dry mortar. A cementitious material comprises at least one cement, aggregates, optionally further binders such as pozzolanic and/or latent hydraulic binders, optionally admixtures, and optionally water.

The term "recipe for cementitious material" refers to any instruction, written, implemented by a computer device, or in any other form, comprising information on the composition of a cementitious material. Typically, a recipe for cementitious materials comprises or consists of a list of components of a cementitious material with their respective dosages. Dosages are typically expressed in w%, Vol%, mol%, kg, or kg/m³. In particular, a recipe is not a mixed cementitious material as physical entity, i.e. in form of a powder, but an instruction, full or in part, to prepare such physical entity.

Cement within the present context preferably comprises or consists of Portland cement, alumina cement, and/or calcium sulphoaluminate cement. Portland cement is especially preferred. Portland cement can be any cement according to standard EN 197-1. In particular type CEM I, CEM II, CEM III, CEM IV, or CEM V. Portland cements according to other international standards, e.g. ASTM standards or Chinese standards, can be used as well. The term "alumina cement" stands in particular for a cement with an aluminum content, measured as Al₂O₃, of at least 30 wt.-%, especially at least 35 wt.-%, in particular 35 - 58 wt.-%. Preferably, the alumina cement is alumina cement according to standard EN 14647.

Pozzolanic and latent hydraulic binders preferably are selected from the group consisting of slag, especially blast furnace slag or basic oxygen slag, clay, calcined clay, especially metakaolin, kiln dust, microsilica, fly ash, pyrogenic silica, precipitated silica, silica fume, zeolite, rice husk ash, burnt oil shale, and natural pozzolane such as pumice and trass.

Admixtures can be selected from plasticizers, superplasticizers, shrinkage reducers, air entrainers, de-aerating agents, stabilizers, viscosity modifiers, thickeners, water reducers, accelerators, activating agents, retarders, water resisting agents, fibers, blowing agents, defoamers, redispersible polymer powders, dedusting agents, chromate reducers, pigments, biocides, corrosion inhibitors, and steel passivating agents.

Water may be present in a cementitious material. Where water is present, the cementitious material especially is a wet concrete or wet mortar. Water may also be absent in a cementitious material of the present invention. Where essentially no water is present, the cementitious material especially is a dry mortar.

Aggregates can be any aggregate typically used for construction materials. Typical aggregates are for example rock, crushed stone, such as crushed limestone, gravel, sand, especially quartz sand, river sand and/or manufactured sand. Aggregates may also be bio-based aggregates such as for example hemp fibers.

The particle size distribution of an aggregate as determined by sieve analysis is herein called gradation or grading of aggregates. A grading therefore is synonymous to a range of particle sizes. Suitable aggregates within the present context may have a particle size of between 0.063 - 32 mm. Particularly suitable aggregates have gradings of 0.063 - 0.3 mm, 0.075 - 0.425 mm, 0.1 - 0.6 mm, 0.3 - 0.9 mm, 0.7 - 1.2 mm, 0.425 - 2.0 mm, 1.5 - 2.2 mm, 2.0 - 3.2 mm, and 2.0 - 4.75 mm. However, other gradings are also possible. Particle sizes down to a size of 0.063 mm can be measured by sieve analysis according to standard DIN EN 933-1:2012-03. The process separates fine particles from more coarse particles by passing the material through a number of sieves of different mesh sizes. As a result the percentage of particles passing through a sieve of a given size is given. Another possibility to measure particle sizes is laser diffraction as described in standard ISO 13320:2009. In particular, a Mastersizer 2000 instrument with a Hydro 2000G dispersion unit and the Mastersizer 2000 software from Malvern Instruments GmbH (Germany) is used. Laser diffraction is in particular effective to measure the size of small particles and especially of particle with a size of below 0.063 mm.

Within the present context, where a grading or range of particle sizes measured according to standard DIN EN 933-1:2012-03 is given, the lower particle size refers to the mesh size of the sieve where essentially none of the aggregate passes and the upper particle size refers to the mesh size of the sieve where essentially all of the aggregate passes. Where a lower limit of particle size measured according to standard DIN EN 933-1:2012-03 is given, such limit refers to the mesh size of the sieve where essentially none of the aggregate passes. Where an upper limit of particle size measured according to standard DIN EN 933-1:2012-03 is given, such limit refers to the mesh size of the sieve where essentially all of the aggregate passes. Another way to describe a grading is the indication of one or more D-values. For example, a D10 value correspond to the particle size where only 10% of all particles have a lower particle size, whereas a D90 value corresponds to a particle size where only 10% of all particles have a larger particle size. In this denomination, the average particle size corresponds to the D50 value.

In a cementitious material of the present invention there are aggregates of different grading. Aggregates of different grading preferably are of the same chemistry and only differ in particle size. However, it is also possible that aggregates of different grading differ also chemically.

Aggregates of different gradation can be divided into a coarse fraction of aggregate and a fine fraction of aggregate. The coarse fraction of aggregate comprising all aggregate of coarse particle size and the fine fraction of aggregate comprising all aggregate of fine particle size. Therefore, the coarse fraction of aggregate as well as the fine fraction of aggregate may comprise several gradings of aggregate respectively.

The step of "dividing the aggregates in said recipe into at least one coarse fraction and at least one fine fraction" means that the aggregates in the recipe for cementitious material are classified according to their particle size. Aggregates having a particle size larger than a given threshold value are classified as coarse aggregates and belong to the coarse fraction of aggregates. Aggregates having a particle size lower than a given threshold value are classified as fine aggregates and belong to the fine fraction of aggregates.

According to embodiments, in a method of the present invention the coarse fraction of aggregates has a particle size as determined by sieve analysis according to standard EN 933-1:2012 of not lower than 1.2 mm, preferably not lower than 1.5 mm, in particular has a particle size between 1.2 - 32 mm, preferably between 1.5 - 4.0 mm especially between 1.5 - 3.2 mm.

According to embodiments, in a method of the present invention the fine fraction of aggregates has a particle size as determined by sieve analysis according to standard EN 933-1:2012 of not higher than 1.2 mm, preferably not higher than 1.0 mm, in particular has a particle size between 0.06 - 1.2 mm, preferably between 0.06 - 1.0 mm.

It is preferred within the present context that the coarse fraction of aggregates and/or the fine fraction of aggregates have a multimodal, preferably a bimodal, particle size distribution.

Especially, the fine fraction of aggregates comprises at least two, preferably at least three, especially three or four different gradings of aggregate.

It is, for example, possible that a cementitious material comprises as aggregates sand with gradings 0.06 - 0.3 mm, 0.1 - 0.6 mm, 0.3 - 0.9 mm, 0.7 - 1.2 mm, 1.5 - 2.2 mm, and 2.0 - 3.2 mm. In this case, the coarse fraction of aggregates preferably comprises the sand gradings 1.5 - 2.2 mm, and 2.0 - 3.2 mm, while the fine fraction of aggregates preferably comprises the sand gradings 0.06 - 0.3 mm, 0.1 - 0.6 mm, 0.3 - 0.9 mm, and 0.7 - 1.2 mm. In each case determined by sieve analysis according to standard EN 933-1:2012.

Aggregates within the present context do not include fine powders which are referred to as fillers. A filler has an average particle size of below 0.063 mm, such as for example 10 µm or 1 µm. A particularly suitable filler is fine limestone powder or fine dolomite powder.

A particularly suitable aggregate is sand. A particularly suitable filler is fine limestone.

Step (a) of retaining the coarse fraction means that the coarse fraction of aggregate is not changed in the recipe for cementitious material. Especially, this means that the chemistry, gradation, and dosage of the coarse fraction of aggregate is not changed in the recipe for cementitious material.

Step (b) of replacing 1:1 by weight of the fine fraction of aggregates by tailings means that all of the fine fraction of aggregates is replaced by tailings 1:1 by weight. In this step, the whole amount of the fine fraction of aggregates is replaced and not only part, for example not only one gradation within this fraction. It is a particular advantage of the present invention that the tailings do not need to be optimized for their particle size distribution. It is also not necessary to use tailings of different gradation to replace the fine fraction of aggregate.

Step (c) of adjusting the amount of CaO, Ca(OH)₂, and/or very fine CaCO₃ in the recipe for cementitious materials means that the amount of CaO, Ca(OH)₂, and/or very fine CaCO₃ is set to a dosage within these limits, relative to the total dry weight of the cementitious material. In case where additional CaO, Ca(OH)₂, and/or very fine CaCO₃ needs to be added to the recipe, the dosage of tailings is reduced according to the percentage content. In case where the amount of CaO, Ca(OH)₂, and/or very fine CaCO₃ needs to be reduced in the recipe, the dosage of tailings is increased according to the percentage content.

Very fine CaCO₃ has a particle size D90 of not more than 2 µm.

Without wishing to be bound by theory, it is believed that CaO, Ca(OH)₂, and/or very fine CaCO₃ trigger or increase the reactivity of the tailings. An increased reactivity of the tailings may compensate for the poorer mechanical performance of the cementitious material due to the missing optimization of the gradation of the tailings. An increased reactivity of the tailings may also compensate for the lower hardness due to reduced contents of quartzitic aggregates.

Preferably, a method of the present invention additionally comprises a step (iv) manufacturing of a cementitious material according to the adjusted recipe.

The manufacturing of a cementitious material can be done by any means known to the skilled person. In particular, the manufacturing can be done by mixing the components according to the adjusted recipe of the cementitious material by means of a hand-held agitator, Hobart mixer, portable concrete mixer, mixing truck, mixing bucket, paddle mixer, jet mixer, screw mixer, auger mixer, horizontal single shaft mixer, twin shaft paddle mixer, vertical shaft mixer, ribbon blender, orbiting mixer, planetary mixer, change-can mixer, tumbling vessel, vertical agitated chamber or air agitated operations. Mixing can be continuously, semi-continuously or batch-wise.

Within the present context, the term "tailings" refers to a mineral material excavated from an underground operation such as, for example, excavation of a tunnel, a borehole or a mine. Mine tailings are tailings from mining operations. Mine tailings are the residual mineral materials after extraction of the valuable materials from the ore. According to preferred embodiments, the tailings are mine tailings.

Tailings can vary in chemical material and physical appearance in a wide range. Generally, the chemical composition will largely depend on the location and chemical composition of the deposit from where the tailings were extracted. Furthermore, the chemical composition may also be influenced by the extraction methods as well as subsequent storage time and conditions. The physical appearance, including particle size and shape, typically also depends on the mechanical treatment of the ore and the tailings.

Preferably, tailings within the present context are not calcined.

According to preferred embodiments of the present invention, tailings, especially mine tailings comprise or consist of silicates and aluminosilicates. According to preferred embodiments, tailings, especially mine tailings of the present invention comprise or consist of quartz, feldspar, mica, amphibole, pyroxene, olivine, orthoclase, diopside, biotite, chlorite, cordierite, chalcopyrite. Other minerals such as, for example, magnetite and gypsum may additionally be present. It is preferred within the present context, that tailings, especially mine tailings, are essentially free of phyllosilicates. Essentially free means that the content is less than 5 wt.-%, preferably less than 1 wt.-%, more preferably less than 0.5 wt.-% relative to the total dry weight of the tailings.

The gradation of tailings, especially mine tailings may vary. Aggregates typically have particle sizes of more than 0.063 mm as determined by sieve analysis according to standard EN 933-1:2012. Aggregates typically only contain very few or essentially no particles of a size below 0.063 mm. Tailings typically have a significant amount of particles with a particle size below 0.063 mm. Tailings typically are finer than aggregates. Preferably, the tailings have a maximum particle size which is not more than 1/2, preferably 1/3, of the lowest particle size of the coarse fraction of aggregates.

It is, for example, possible that tailings, especially mine tailings, of the present invention have a particle size D99 of 0.2 mm, a D50 of between 20 - 60 µm, and a D10 of not more than 1 µm as measured according to standard ISO 13320:2009. Tailings, especially mine tailings, with a maximum particle size of not more than 0.2 mm as measured according to standard EN 933-1:2012 or according to standard ISO 13320:2009 are particularly preferred within the present context.

It may also be preferred that the fine fraction of aggregates has a minimum particle size which is at least 1.5 times, more preferably at least 2 times, still more preferably at least 3 times, especially at least 5 times the particle size D50 of the tailings.

It is preferred within the present context that the tailings have a monomodal particle size distribution.

In another aspect the present invention relates to a dry cementitious material obtained by a method as described above, said cementitious material comprising
a) at least one cement
b) a coarse fraction of aggregates with a particle size as determined according to standard EN 933-1:2012 of between 1.2 - 32 mm, preferably between 1.5 - 4.0 mm, especially between 1.5 - 3.2 mm,
c) optionally filler with a particle size D90 as determined according to standard ISO 13320:2009 of 100 µm or less, preferably 63 µm or less,
d) tailings with a maximum particle size which is not more than 1/2, preferably 1/3, of the lowest particle size of the coarse fraction of aggregates, and
e) CaO, Ca(OH)₂, and/or very fine CaCO₃.

All embodiments and features described for another aspect also apply to this aspect.

In particular, the coarse aggregate is sand, the filler is fine limestone or fine dolomite powder, and the tailings are mine tailings.

In particular, the maximum particle size of the tailings is determined according to standard EN 933-1:2012 or according to standard ISO 13320:2009. Preferably, the maximum particle size of the tailings as measured according to standard EN 933-1:2012 or according to standard ISO 13320:2009 is not higher than 400 µm, preferably 200 µm.

According to preferred embodiments, the dry cementitious material comprises
a) the at least one cement in an amount of between 15 - 40 w%,
b) the coarse fraction of aggregates in an amount of between 20 - 70 w%,
c) the filler in an amount of between 1 - 10 w%,
d) the tailings in an amount of between 10 - 40 w%, and
e) the CaO, Ca(OH)₂, and/or very fine CaCO₃ in an amount of between 1 - 5 w%, in each case relative to the total weight of the dry composition.

The cementitious material of the present invention may especially be a cementitious tile adhesive, a grouting material, a self-levelling underlayment, a self-levelling overlayment, a render, a repair mortar, a masonry thin join mortar or concrete, a screed, a wall leveller for interior or exterior use, a non-shrink grout, a thin joint mortar, a waterproofing mortar, or an anchoring mortar. A cementitious tile adhesive is especially according to standard EN 12004-1. A grouting material is especially according to standard EN 13888. A self-levelling underlayment or a self-levelling overlayment is especially according to standard EN 13813. A render is especially according to standard EN 998-1. A repair mortar is especially according to standard EN 1504-3. A masonry mortar or concrete is especially according to standards EN 998-2 and EN 206-1. A screed is especially according to standard EN 13813. A non-shrink grout is especially according to standard EN 1504-6. A thin joint mortar is especially according to standard EN 998-2. A waterproofing mortar is especially according to standard EN 1504-2. An anchoring mortar is especially according to standard EN 1504-6.

A cementitious material of the present invention may also be a concrete.

In another aspect, the present invention also relates to the use of a combination of
(i) tailings with a maximum particle size as measured according to standard EN 933-1:2012 or according to standard ISO 13320:2009 of not more than 400 µm, preferably 200 µm, and
(ii) at least one of CaO, Ca(OH)₂, and very fine CaCO₃ to replace the fine fraction of aggregates in a cementitious material.

All embodiments and features described for another aspect also apply to this aspect.

### Examples

The following table 1 gives an overview of raw materials used.

**Table 1 - raw materials**

| Cement | CEM \| 52.5 R |
|---|---|
| Sand grading 1 | Quartz sand, 0.06 - 0.3 mm |
| Sand grading 2 | Quartz sand, 0.1 - 0.6 mm |
| Sand grading 3 | Quartz sand, 0.3 - 0.9 mm |
| Sand grading 4 | Quartz sand, 0.7 - 1.2 mm |
| Sand grading 5 | Quartz sand, 1.5 - 2.2 mm |
| Sand grading 6 | Quartz sand, 2.0 - 3.2 mm |
| Tailings 1 | VMS tailings (appr. 45 w% quartz, 15 w% orthoclase, 10 w% diopside, 8 w% microcline, 5 w% biotite, 5 w% chlorite, 5 % cordierite, 4 w% albite), particle size D90 = 130 µm ; D50 = 45 µm |
| Tailings 2 | IOT tailings (appr. 15 w% quartz, 15 w% albite, 15 w% graphite, 13 w% annite, 7 w% anorthite, 7 w% tremolite, 5 w% hornblende, 5 w% calcite, 4 w% actinolite, 3 w% muscovite, 3 w% fluoroapatite), particle size D90 = 200 µm ; D50 = 100 µm |
| CaO | Sigma Aldrich, anhydrous, 99.99% purity |
| Ca(OH)₂ | Sigma Aldrich, >95.0% purity |
| Filler 1 | CaCO₃, particle size D90 = 17 µm, D50 = 5 µm |
| Filler 2 | CaCO₃, particle size D90 = 90 µm, D50 = 10 µm |
| Additives | Mixture of thickener (cellulose ether), superplasticizer (polycarboxylate ether), defoamer (hydrocarbons, glycols), shrinkage reducing agent (glycol) |

Sand gradings 1 - 4 form the fine fraction of aggregate. Sand of gradings 5 and 6 form the coarse fraction of aggregate.

Cementitious materials were prepared by mixing the dry ingredients according to the recipe for cementitious material (R-1, not inventive),the adjusted recipe for cementitious material (A-1 and A-2, inventive), or the comparative adjusted recipe (C-1 and C-2, not inventive) until visually homogeneous. Cement, sand of respective grading, tailings, filler, and additives are given in w% relative to the total dry formulation in below table 2. Water was added to the respective dry mix as indicated in below table 2. Mixing was done on a Hobart mixer for a total of 3 min at 25 °C. After 1 min of mixing, the mixer was stopped, the material was scrapped down and mixing was resumed after 30 seconds of stopping the mixer.

Slump was measured according to standard EN 1015-3 without strokes after the time indicated in below table 2.

Compressive strength was measured according to standard EN 12190 after the time indicated in below table 2. Flexural strength was measured according to standard EN 1015-11.

Results are shown in below table 2.

**Table 2: Recipes for cementitious formulation and performance**

| | **R-1** | **A-1** | **A-2** | **C-1** | **C-2** |
|---|---|---|---|---|---|
| Cement | 35.6 | 35.6 | 35.6 | 35.6 | 35.6 |
| Sand grading 1 | 4.2 | | | | |
| Sand grading 2 | 6.8 | | | | |
| Sand grading 3 | 9 | | | | |
| Sand grading 4 | 10 | | | | |
| Sand grading 5 | 13.3 | 32 | 32 | 32 | 32 |
| Sand grading 6 | 18 | | | | |
| Tailings 1 | | 29.4 | | 31.4 | |
| Tailings 2 | | | 29.4 | | |
| CaO | 1 | | | | |
| Ca(OH)₂ | | 2 | 2 | | 2 |
| Filler 1 | 1.3 | | | | |
| Filler 2 | | | | | 29.4 |
| Additives | 0.8 | 0.96 | 0.96 | 0.96 | 0.96 |
| Weight ratio water : powder | 0.122 | 0.128 | 0.128 | 0.128 | 0.128 |
| Compressive strength after 1 d [MPa] | 56.1 | 51.8 | 50.6 | 13.0 | 8.9 |
| Flexural strength after 1 d [MPa] | 8.8 | 9.1 | 8.1 | 2.5 | 8.6 |

The results in table 2 show that the replacement of the fine fraction of aggregate by tailings is possible without a significant loss of strength (cf examples A-1 and A-2 versus example R-1). In case where there is no Ca(OH)₂ present, the replacement of the fine fraction of aggregates by tailings does lead to significantly reduced strength (cf example C-1). Example C-2 shows that it is not possible to replace the fine fraction of aggregates by calcium carbonate filler of a similar or lower particle size as compared to useful tailings.

## Claims

1. A method for the manufacture of a cementitious material, said method comprising the steps of
(i) providing a recipe for a cementitious material comprising aggregates of different grading,
(ii) dividing the aggregates in said recipe into a coarse fraction and a fine fraction,
(iii) adjusting the recipe for the cementitious material to obtain an adjusted recipe for the cementitious material by the steps of
(a) retaining the coarse fraction of aggregates,
(b) replacing 1:1 by weight of the fine fraction of aggregates by tailings,
(c) adjusting the amount of CaO, Ca(OH)₂, and/or very fine CaCO₃ in the recipe for the cementitious material to between 1 - 5 w%, relative to the total dry weight of the cementitious material.

2. The method as claimed in claim 1 additionally comprising a step (iv) manufacturing of a cementitious material according to the adjusted recipe.

3. The method as claimed in at least one of the preceding claims, **characterized in that** the tailings are mine tailings.

4. The method as claimed in at least one of the preceding claims, **characterized in that** the coarse fraction of aggregates has a particle size as determined by sieve analysis according to standard EN 933-1:2012 of not lower than 1.2 mm, preferably not lower than 1.5 mm, in particular has a particle size between 1.2 - 32 mm, preferably between 1.5 - 4.0 mm especially between 1.5 - 3.2 mm.

5. The method as claimed in at least one of the preceding claims, **characterized in that** the fine fraction of aggregates has a particle size as determined by sieve analysis according to standard EN 933-1:2012 of not higher than 1.2 mm, preferably not higher than 1.0 mm, in particular has a particle size between 0.06 - 1.2 mm, preferably between 0.06 - 1.0 mm.

6. The method as claimed in at least one of the preceding claims, **characterized in that** the coarse fraction of aggregates and/or the fine fraction of aggregates have a multimodal, preferably a bimodal, particle size distribution.

7. The method as claimed in at least one of the preceding claims, **characterized in that** the fine fraction of aggregates comprises at least two, preferably at least three, especially three or four different gradings of aggregate.

8. The method as claimed in at least one of the preceding claims, **characterized in that** the tailings have a maximum particle size which is not more than 1/2, preferably 1/3, of the lowest particle size of the coarse fraction of aggregates.

9. The method as claimed in at least one of the preceding claims, **characterized in that** the tailings have a monomodal particle size distribution.

10. The method as claimed in at least one of the preceding claims, **characterized in that** the tailings are essentially free from phyllosilicates.

11. A dry cementitious material obtained by a method as claimed in at least one of claims 1 - 10, said cementitious material comprising
a) at least one cement,
b) a coarse fraction of aggregates with a particle size as determined according to standard EN 933-1:2012 of between 1.2 - 32 mm, preferably between 1.5 - 4.0 mm, especially between 1.5 - 3.2 mm,
c) optionally filler with a particle size D90 as determined according to standard ISO 13320:2009 of 100 µm or less, preferably 63 µm or less,
d) tailings with a maximum particle size which is not more than 1/2, preferably 1/3, of the lowest particle size of the coarse fraction of aggregates, and
e) CaO, Ca(OH)₂, and/or very fine CaCO₃.

12. The cementitious material as claimed in claim 11, **characterized in that** the maximum particle size of the tailings as measured according to standard EN 933-1:2012 or according to standard ISO 13320:2009 is not higher than 400 µm, preferably 200 µm.

13. The dry cementitious material as claimed in claim 11 or 12, **characterized in that** it comprises
a) the at least one cement in an amount of between 15 - 40 w%,
b) the coarse fraction of aggregates in an amount of between 20 - 70 w%,
c) the filler in an amount of between 1-10 w%,
d) the tailings in an amount of between 10 - 40 w%, and
e) the CaO, Ca(OH)₂, and/or very fine CaCO₃ in an amount of between 1 - 5 w%,
in each case relative to the total weight of the dry composition.

14. The use of a combination of
(i) tailings with a maximum particle size as measured according to standard EN 933-1:2012 or according to standard ISO 13320:2009 of not more than 400 µm, preferably 200 µm and
(ii) at least one of CaO, Ca(OH)₂, and very fine CaCOs,
to replace the fine fraction of aggregates in a cementitious material.
